# EUROPEAN PATENT APPLICATION

(11) **EP 4 563 344 A1**
(43) Date of publication of application: **04.06.2025**
(21) Application number: 23872711.9
(22) Date of filing: 27.06.2023
(51) Int. Cl.: B32B 27/08, B32B 7/023, B32B 27/28, B32B 27/36, B32B 7/022, B32B 27/34, B32B 7/12

(54) **MULTILAYER FILM AND PROTECTIVE FILM INCLUDING SAME**

(30) Priority: 27.09.2022 KR 20220122681; 27.09.2022 KR 20220122683
(71) Applicant: SK microworks Co., Ltd., Chungcheongbuk-do 27818 (KR)
(72) Inventor: HAN, Kweonhyung, Suwon-si, Gyeonggi-do 16338 (KR); JANG, Kwangho, Suwon-si, Gyeonggi-do 16338 (KR)
(74) Representative: BCKIP Part mbB
(86) International application number: PCT/KR2023/008968
(87) International publication number: WO 2024/071584

(57) **Abstract**

The multilayer film according to an embodiment is of high applicability as a protective film and comprises: a first layer having one surface and other surface; and a second layer disposed on one surface of the first layer. The Shore D hardness measured on the surface of the second layer is 60 or higher, and the flexural modulus is 1300 MPa or lower. The multilayer film according to an embodiment is easily elongated on curved or bent surfaces, has excellent workability, superior impact absorption functionality, and excellent surface durability.

## Description

### BACKGROUND

### 1. Field

Embodiments relate to a multilayer film with excellent surface protection capabilities while exhibiting flexible properties over a wide temperature range, and a protective film containing the same.

### 2. Description of Related Art

Protective films can be applied to various purposes depending on their performance.

Protective films may be applied as screen protectors in multi-layer electronic devices with display functions such as cell phones, laptops, and monitors. With the recent emergence of flexible equipment, protective films for this application need to be resistant to repeated folding along with impact resistance and optical properties.

The protective film can also be applied as a paint protection film. A paint protection film protects the painted surface from external impacts. For example, an automotive paint protection film is called a paint protection film (PPF). Paint protection films are required to be impact resistant and have good applicability, such as being able to be stretched over curved or angular surfaces of various shapes.

Relevant prior art includes Korean Public Patent Application No. 10-2021-0036219 and Korean Registered Patent No. 10 2242709.

### SUMMARY

It is an object of embodiments to provide multilayer films and protective films comprising thereof that have flexible properties over a wide temperature range with providing good surface protection property.

To achieve the above objectives, a multilayer film according to an embodiment is a multilayer film including: a first layer having one surface and other surface; and a second layer disposed on the one surface of the first layer, wherein a Shore D hardness measured at a surface of the second layer is greater than or equal to 60, and the flexural modulus is less than or equal to 1300 MPa.

The first layer and the second layer may independently include a polymer resin having amide repeating units.

The second layer may have a pencil hardness of at least 4B as measured by ISO15184 on one side of the second layer.

The multilayer film may have a visible light transmittance of 88% or more.

The multilayer film may be a co-extruded film in which the first layer and the second layer share one surface with each other.

The storage modulus of the first layer may be smaller than the storage modulus of the second layer at 0°C.

The multilayer film may further include a third layer disposed on the other side of the first layer.

The storage modulus of the first layer may be smaller than the storage modulus of the third layer at 0°C.

The first layer may include a polyether block amide resin.

The second layer may include a polyamide resin and/or a polyether block amide resin.

The multilayer film may be a co-extruded film in which the first layer and the third layer share one surface with each other.

A protective film according to another embodiment includes a release paper and a multilayer film disposed on the release paper. The multilayer film is a multilayer film as described above.

In another embodiment, a multilayer electronic device includes a multilayer film as described above.

The multilayer film may be applied as a protective film or a support film within a multilayer electronic device.

The multilayer film has a use of a protective film or a support film in a multilayer electronic device.

### BRIEF DESCRIPTION OF THE DRAWINGS

FIG. 1 is a conceptual diagram illustrating a cross-sectional view of the structure of a multilayer film, according to one embodiment.
FIG. 2 is a conceptual diagram illustrating a cross-sectional view of the structure of a multilayer film, according to another embodiment.
FIG. 3 is a conceptual diagram illustrating the structure of a multilayer film in cross-section, according to another embodiment.
FIG. 4 is a conceptual diagram illustrating the structure of a multilayer film in cross-section, according to another embodiment.
FIG. 5 is a conceptual diagram illustrating a cross-sectional view of the structure of a multilayer electronic device, according to an embodiment.

### DETAILED DESCRIPTION

The present disclosure is hereinafter described in detail with reference to the accompanying drawings, which illustrate embodiments to facilitate practice by one having ordinary skill in the art. However, the disclosure may be implemented in many different forms and is not limited to the embodiments described herein. Throughout the specification, like parts are designated by the same drawing designations.

In the specification, when a configuration is the to "include, comprise" another configuration, it is meant to be inclusive of the other configuration, not exclusive of the other configuration, unless specifically stated to the contrary.

In the specification, when a configuration is the to be "connected" to another configuration, it is not limited to being "directly connected", but also includes being "connected with another configuration in between".

In the specification, the reference to B being positioned on A means B being positioned on A with B directly abutting A or any other configuration therebetween, and shall not be construed as limited to B being positioned abutting the surface of A.

In the specification, the term "combination thereof" as used in a Makushi-style representation means one or more mixtures or combinations selected from the group of components described in the Makushi-style representation, including one or more selected from the group of components.

In the specification, references to "A and/or B" shall mean "A, B, or, A and B".

In this specification, terms such as "first", "second" or "A", "B" are used to distinguish one from the other, unless otherwise indicated.

In this specification, singular expressions shall, unless otherwise indicated, be construed to include the singular or plural as construed from the context.

In this specification, the storage modulus is measured in the range of -50°C to 100°C on the DMA7100 model from HITACHI, according to ASTM D4065. The heating rate is based on the application of 5°C/min..

In this specification, room temperature refers to approximately 20°C and ambient temperature refers to approximately 25°C.

In this specification, letters and/or numbers in combination with the name of a compound mean an abbreviation for the name of the compound.

In this specification, the upper and lower levels of each layer are described with reference to the drawings. However, the location of each layer is not to be construed as limited to the layer structure and location shown in the drawings, and the distinction between upper and lower is to be understood as a relative concept to describe the location of each layer.

In this specification, the relative sizes, thicknesses, etc. of the configurations shown in the drawings may be exaggerated for purposes of illustration.

Below, an example implementation are described in more detail.

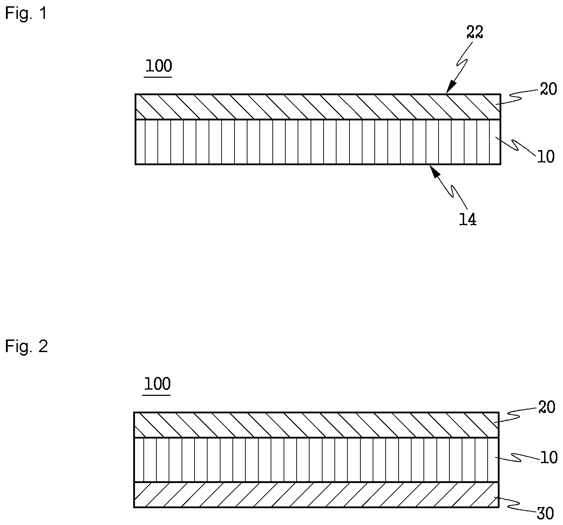

FIGS. 1 through 4 are conceptual diagrams, each illustrating a cross-sectional view of the structure of a multilayer film according to an embodiment. Referring to FIGS. 1 through 4, a multilayer film of an embodiment will be described in more detail.

### Multilayer Film 100

To achieve the above objectives, a multilayer film 100 according to an embodiment comprises a first layer 10 having one surface and other surface; and a second layer 20 disposed on the one surface of the first layer.

The multilayer film 100 may further comprise a third layer 30 disposed below other surface 14 of the first layer.

The first layer 10 and the second layer 20 have different hardness values. The hardness value of the second layer 20 may be greater than the hardness value of the first layer 10.

The first layer 10 and the third layer 30 may have different hardness values. The hardness value of the third layer 30 may be greater than the hardness value of the first layer 10.

The second layer 20 and the third layer 30 may have the same hardness value as each other.

The second layer 20 and the third layer 30 may have different hardness values.

The Shore D hardness of the second layer 20 is based on a measurement of the surface 22 of the second layer in accordance with ASTM D2240 as a hardness.

The second layer 20 may have a Shore D hardness of 60 or greater, 68 or greater, 72 or greater, 75 or greater, 78 or greater, or 80 or greater. The second layer 20 may have a shore D hardness of 90 or less. Applying a second layer with a Shore D hardness in this range can provide a more scratch-resistant multilayer film.

The shore D hardness of the first layer 10 may be 71 or less.

The shore D hardness of the first layer 10 may be greater than the shore D hardness of the second layer 20, or it may be less.

It is preferred that the Shore D hardness of the first layer 10 is smaller than the Shore D hardness of the second layer 20. In other words, a layer with better elasticity may have a relatively weaker hardness, and an embodiment may provide a film with a good surface hardness and an improved flexural modulus by placing a layer with better elasticity in the first layer even though it has a lower hardness, and a layer with good strength in the second layer even though it has a somewhat weaker elasticity.

The difference between the Shore D hardness of the first layer 10 and the second layer 20 may be greater than or equal to 5, greater than or equal to 10, or greater than or equal to 20. The difference may be 60 or less. In such cases, it is more advantageous to provide a multilayer film with a higher surface hardness.

The difference between the Shore D hardness of the first layer 10 and the third layer 30 may be greater than or equal to 5, greater than or equal to 10, or greater than or equal to 20. The difference may be 60 or less. In such cases, it is more advantageous to provide a multilayer film with a better surface hardness.

The first layer 10 and the second layer 20 have different storage modulus values. At the same temperature, the modulus value of the first layer 10 may be greater than the storage modulus value of the second layer 20.

In this case, a multilayer film 100 may be provided that has simultaneously improved surface durability and impact resistance as assessed at the surface of the second layer 20. The highly elastic polymeric material is typically soft and may be characterized by a smooth surface. Highly elastic polymeric materials may exhibit good impact resistance, but are prone to deformation by sharp external impacts and may easily leave marks on the surface. The multilayer film of the embodiment comprises both a layer with a relatively strong surface hardness and a layer with a relatively small soft furnace storage modulus, which can simultaneously improve the impact resistance and hardness properties.

The first layer 10 and the third layer 30 may have different storage modulus values. At the same temperature, the storage modulus value of the first layer 10 may be greater than the storage modulus value of the third layer 20.

The second layer 20 and the third layer 30 may have the same storage modulus value as each other.

The second layer 20 and the third layer 30 may have different storage modulus values.

The storage modulus of the first layer 10 at 0°C may be 1,400 Mpa or less, may be 1,200 MPa or less, may be 1,000 MPa or less, may be 800 MPa or less, may be 500 MPa or less, or may be 100 MPa or less. The storage modulus of the first layer 10 at 0°C may be greater than or equal to 20 Mpa, or may be greater than or equal to 40 MPa. This means that it has a relatively low storage modulus at low temperatures. By applying a first layer having these characteristics to a multilayer film, the multilayer film can have relatively good elasticity even at low temperatures, thereby providing the multilayer film with good low-temperature impact absorption properties.

At 0°C, the storage modulus of the second layer 20 may be greater than 700 Mpa, greater than or equal to 850 Mpa, greater than or equal to 1,000 Mpa, greater than or equal to 1,100 Mpa, greater than or equal to 1,400 Mpa, greater than or equal to 1,500 Mpa, or greater than or equal to 2,000 Mpa. The storage modulus of the second layer 20 at 0°C may be 7,000 Mpa or less.

At 0°C, the storage modulus of the third layer 30 may be greater than 700 Mpa, greater than or equal to 850 Mpa, greater than or equal to 1,000 Mpa, greater than or equal to 1,100 Mpa, greater than or equal to 1,400 Mpa, greater than or equal to 1,500 Mpa, or greater than or equal to 2,000 Mpa. The storage modulus of the third layer 30 at 0°C may be 7,000 Mpa or less.

A difference between the storage modulus value of the first layer and the storage modulus value of the second layer at 0°C may be greater than or equal to 500 MPa, greater than or equal to 700 MPa, greater than or equal to 900 MPa, or greater than or equal to 1,200 MPa. The difference may be 3,000 MPa or less.

By applying a first layer, a second layer, and/or a third layer each having such a storage modulus to the multilayer film, it is possible to provide a multilayer film having excellent impact absorption at low temperatures and strong properties against surface scratches.

The storage modulus of the first layer 10 at 40°C may be 1,200 MPa or less, may be 1,000 MPa or less, may be 900 MPa or less, may be 800 MPa or less, may be 600 MPa or less, may be 400 MPa or less, may be 200 MPa or less, or may be 100 MPa or less. The storage modulus of the first layer 10 at 40°C may be greater than or equal to 5 Mpa, or may be greater than or equal to 15 MPa. This means having a relatively low storage modulus at high temperatures, and by applying a first layer having such characteristics to a multilayer film, the multilayer film may have relatively good elasticity even at high temperatures, thus imparting good impact absorption properties to the multilayer film.

At 40°C, the storage modulus of the second layer 20 may be greater than 300 Mpa, greater than or equal to 400 Mpa, greater than or equal to 500 Mpa, greater than or equal to 700 Mpa, greater than or equal to 900 Mpa, greater than or equal to 1,000 Mpa, or greater than or equal to 1,200 Mpa. The storage modulus of the second layer 20 at 40°C may be 6,000 Mpa or less.

At 40°C, the storage modulus of the third layer 30 may be greater than 300 Mpa, may be greater than or equal to 400 Mpa, may be greater than or equal to 500 Mpa, may be greater than or equal to 700 Mpa, may be greater than or equal to 900 Mpa , may be greater than or equal to 1,000 Mpa, or may be greater than or equal to 1,200 Mpa. The storage modulus of the third layer 30 at 40°C may be 6,000 Mpa or less.

At 40°C, the difference between the storage modulus value of the first layer and the storage modulus value of the second layer may be 300 MPa or more, 400 MPa or more, 500 MPa or more, 800 MPa or more, or 1,100 MPa or more. The difference may be 5,000 MPa or less.

At 40°C, the difference between the storage modulus value of the first layer and the storage modulus value of the third layer may be 300 MPa or more, 400 MPa or more, 500 MPa or more, 800 MPa or more, or 1,100 MPa or more. The difference may be 5,000 MPa or less.

The application of a first, second and/or third layer(s), each having such a storage modulus to a multilayer film may provide a multilayer film with good impact absorption and good strong properties against surface scratches.

The multilayer film 100 may have excellent pencil hardness characteristics.

The pencil hardness evaluated on the surface of the second layer 20 or the third layer 30 may be 4B or greater, or may be 3B or greater. The pencil hardness is based on an evaluation according to ISO15184.

The pencil hardness assessed on the surface of the first layer 10 may be 5B or less, or 7B or less.

The multilayer film 100 has excellent pen tracing characteristics.

The pen tracing test can be used to evaluate how quickly a multilayer film can remove temporary scratch marks caused by external forces or temporary wrinkles caused by bending or rolling. The pen tracing test is performed by rubbing an H-type pencil, which is used to evaluate pencil hardness, repeatedly on the surface of the test object about 10 times, leaving it for 5 minutes, and visually evaluating whether a trace remains. The multilayer film has an excellent characteristic of not leaving a residue that can be confirmed by the naked eye as a result of the pen tracing test.

The multilayer film 100 may be characterized by a flexural modulus of 1300 MPa or less.

Flexural Modulus (unit: MPa) is based on measurements at room temperature according to ASTM D790.

At room temperature, the flexural modulus of the multilayer film 100 may be 1300 MPa or less, 1200 MPa or less, or 1100 MPa or less. The flexural modulus of the multilayer film 100 may be 1000 MPa or less, 800 MPa or less, 600 MPa or less, or 550 MPa or less. The flexural modulus of the multilayer film 100 may be greater than or equal to 100 MPa, or may be greater than or equal to 300 MPa.

The flexural modulus of these multilayer films is relatively low compared to films with a high surface hardness of a single layer, which is good for applying as a protective film for flexible displays due to its excellent flexibility. In addition, multilayer films with this flexural modulus feature are flexible and may be easily stretched to fit curved or cut surfaces, which is advantageous when applied as PPF films.

The first layer 10 may have a flexural modulus of 800 MPa or less, or may have a flexural modulus of 600 MPa or less.

The flexural modulus of the second layer 20 and/or the third layer 30 may each independently be greater than or equal to 900 MPa, greater than or equal to 1000 MPa, greater than or equal to 1200 MPa, or greater than or equal to 1500 MPa.

The multilayer film 100 may have layers with different flexural modulus, which may provide a film with excellent surface hardness, substantially prevent delamination of the multilayer film, and provide an overall flexible film.

The multilayer film 100 may have excellent optical properties.

The multilayer film 100 may have a haze of 3% or less, may be 2% or less, or may be 1% or less. The haze may be greater than or equal to 0%, or may be greater than or equal to 0.1%.

The multilayer film 100 may have a visible light transmittance of 88% or more, or 90% or more. The transmittance may be 99% or less, or may be 95% or less. The transmittance is based on the total light transmittance according to ISO 13468.

The multilayer film 100 may have a transmittance yellowness of 1 or less, may be 0.8 or less, may be 0.65 or less, or may be 0.6 or less. The transmittance yellowness may be greater than or equal to 0, or may be greater than or equal to 0.3.

The first layer 10 may comprise an elastic layer.

The first layer 10 may be an elastic layer.

The first layer may be an elastic layer having a relatively low storage modulus over a wide temperature range. In this case, it provides the advantage of being able to function reliably as a protective film not only at room temperature, but also in a wide temperature range, comprising low and high temperatures.

The elastic layer may comprise a polymer comprising amide residues as repeating units.

The elastic layer may be a plastic film comprising a polymer having amide residues as repeating units.

The elastic layer may be an elastomeric film comprising a polymer having amide residues as repeating units.

The amide residues may be at least 15 wt%, or may be at least 25 wt%, based on the total amount of polymer comprised in the elastic layer. The amide residues may be 99 wt% or less, 90 wt% or less, 80 wt% or less, 70 wt% or less, or 60 wt% or less, based on the total polymer comprised in the elastic layer. Applying a polymer having these characteristics to the elastic layer may provide an elastic film with better mechanical properties.

The elastic layer may comprise an elastic polyamide (long chain polyamide). The elastic polyamide may be, for example, Rilsan^{®}, Rilsamid^{®}, from Akema, for example.

The elastic layer may comprise a polyether block amide (PEBA). The polyether block amide comprises two phases: a polyamide phase, which is a rigid phase, and a polyether phase, which is a soft phase. The polyamide region may comprise a substantially crystalline phase having a melting point of about 80°C or higher, more particularly about 130°C to 180°C, and the polyether region may comprise a substantially amorphous soft region having a glass transition temperature of about -40°C or lower, more particularly about -80°C to -40°C, and existing in a lower temperature region. The polyether block amides may be, for example, Pebax^{®}, Pebax^{®} Rnew^{®} from ARKEMA FRANCE, VESTAMID^{®} E from EVONIK, and the like.

The elastic layer may comprise a thermoplastic polyurethane (TPU), i.e. a copolymer of polyurethane blocks (PU) and polyether blocks (PE), also called polyetherurethane.

The elastic layer may comprise a polyether ester copolymer (COPE).

As an elastic layer, a film prepared according to the method disclosed in Korean Patent No. 10-2286935 may be applied.

The second layer 20 may comprise a polymer comprising amide residues as repeating units.

The second layer 20 may be a plastic film comprising a polymer having amide residues.

The second layer 20 may be an elastomeric film comprising a polymer having amide residues.

The third layer 30 may be, for example, an adhesive layer.

Specifically, the adhesive layer may be a layer comprising an acrylate-based adhesive resin, a silicone-based adhesive resin, or the like, but is not limited thereto.

The second layer 20 and/or the third layer 30 may each independently comprise a polymer comprising amide residues in repeating units.

The second layer 20 and/or the third layer 30 may each independently be a plastic film comprising a polymer having amide residues.

The second layer 20 and/or the third layer 30 may each be an elastomeric film comprising polymers that independently have amide residues.

The first layer 10 and the second layer 20 may each independently comprise a polymer having amide residues. The first layer 10 and the second layer 20 may be polymeric films, each independently having amide residues. The first layer 10 and the second layer 20 may be polymeric films each independently having amide residues, and the first layer 10 and the second layer 20 may be coextruded films that share one surface with each other.

In this case, the coextrusion method may provide sufficient interlayer adhesion without forming a separate adhesive layer when manufacturing multilayer films.

The second layer 20, the first layer 10, and the third layer 30 may each independently comprise a polymer having amide residues. The second layer 20, the first layer 10, and the third layer 30 may each be a polymeric film that independently has amide residues.

The second layer 20, the first layer 10, and the third layer 30 may be three layers of coextruded film, with the first layer 10 and the second layer 20 sharing one surface with each other, and the first layer 10 and the third layer 30 sharing other surface with each other.

In this case, the co-extrusion method may provide a multilayer film that has sufficient interlayer bonding force without forming a separate adhesive layer between each layer, and may provide a multilayer film with excellent optical properties without substantially delamination even after repeated bending.

The first layer 10 may have a thickness of less than 2,000 micrometers.

The first layer 10 may have a thickness of 1,500 µm or less, 1,000 µm or less, 500 µm or less, 300 µm or less, 200 µm or less, or 100 µm or less. The first layer 10 may have a thickness of 1 µm or more. The thickness of the first layer 10 may be 10 µm or more, 20 µm or more, or 30 µm or more.

The second layer 20 or third layer 30 may have a thickness of less than 1,500 micrometers.

The second layer 20 or third layer 30 may have a thickness of 1,000 µm or less, 500 µm or less, 300 µm or less, 200 µm or less, or 100 µm or less. The second layer 20 or third layer 30 may have a thickness of 0.1 µm or more. The thickness of the first layer 10 may be greater than or equal to 1 µm, greater than or equal to 3 µm, greater than or equal to 5 µm, or greater than or equal to 10 µm.

The multilayer film 100 may have a thickness of 3,500 µm or less, 2,500 µm or less, 1,500 µm or less, or 1,000 µm or less. The thickness of the multilayer film 100 may be 10 µm or more, 30 µm or more, or 50 µm or more.

The thickness ratio of the second layer 20 and the first layer 10 may be 1: 0.5 to 20, 1: 0.7 to 10, or 1: 1 to 5. The thickness ratio of the third layer 30 and the first layer 10 may be 1: 0.5 to 20, 1: 0.7 to 10, or 1: 1 to 8. If the thickness of the first layer is too small, the entire multilayer film may become somewhat stiff. When the multilayer film has the above-mentioned thickness ratio, it is advantageous to provide a multilayer film having both excellent flexibility and surface hardness properties.

The multilayer film 100 may further comprise an adhesive layer 50 disposed on the other side of the first layer 10 for adhesion to other layers.

The multilayer film 100 may further comprise an adhesive layer 50 disposed on the other side of the third layer 30 for adhesion to the other layers.

The multilayer film 100 may further comprise an adhesive layer 50 disposed on one side of the first layer 10 for adhesion to other layers.

The multilayer film 100 may further comprise an adhesive layer 50 disposed on one surface of the second layer 20 for adhesion to other layers.

The multilayer film 100 may further comprise a coating layer 40 on top of the second layer 20, for the purpose of additional surface protection. The coating layer may be conventionally utilized as a hardcoat layer.

The multilayer film 100 may further comprise an adhesive layer formed on one side of the second layer 20, on the other side of the first layer 10, or on the other side of the third layer 30 for adhesion to other layers, and a release layer (not shown) disposed on one side (or on the other side) of the adhesive layer.

The adhesive layer or release layer may be any adhesive layer or release layer applicable to protective films in general, and is not limited to any particular type. For example, the release layer may be, but is not limited to, a polyethylene terephthalate (PET) film.

### Method of producing Multilayer Film

A method of producing a multilayer film according to another embodiment, comprises operations of preparing a first layer resin composition and a second layer resin composition; and manufacturing of feeding the first layer resin composition and the second layer resin composition into a coextruder, respectively, heating, and extruding to form a multilayer film.

The multilayer film comprises an extruded film having a first layer and a second layer laminated thereto.

The first layer resin composition may comprise a first polymeric resin.

The second layer resin composition may comprise a second polymeric resin.

The operation of preparing may further comprise preparing a third layer resin composition.

The operation of manufacturing may be to form a multilayer film by introducing, heating and extruding a third layer resin composition together with a first layer resin composition and a second layer resin composition, respectively.

The multilayer film may have a second layer disposed on one surface of the first layer.

The extrusion in the operation of manufacturing may be carried out at the extrusion temperature.

In the operation of manufacturing, each resin composition may be extruded at a respective extrusion temperature and stacked by a feed block or the like.

The extrusion temperature of the first layer resin composition may be from about 130°C to about 250°C.

The extrusion temperature of the second layer resin composition may be from about 160°C to about 320°C.

The multilayer film may be a laminate having a second layer disposed on one surface of the first layer and a third layer disposed on other face of the first layer.

The third layer resin composition may be substantially the same as the first layer resin composition. The extrusion temperature of the third layer resin composition may be from about 160°C to about 320°C. In this case, a multilayer film having three layers may be manufactured as a coextruded film.

The third layer resin composition may be substantially different from the first layer resin composition. In this case, each of the three extruded compositions may be manufactured as a coextruded film by stacking them in a feed block or the like.

If the third layer is an adhesive layer, the adhesive composition may be applied to the coextruded laminates of the first and second layers in a coating manner. The coating surface may be, but is not limited to, the other surface of the first layer.

Multilayer films may also be manufactured by forming a first, second and/or third layer and laminating them together. Each lamination may be subjected to a separate adhesive layer or further thermal lamination process as required. However, more efficient multilayer sheets may be produced by the coextrusion method described above.

### Multilayer electronic device

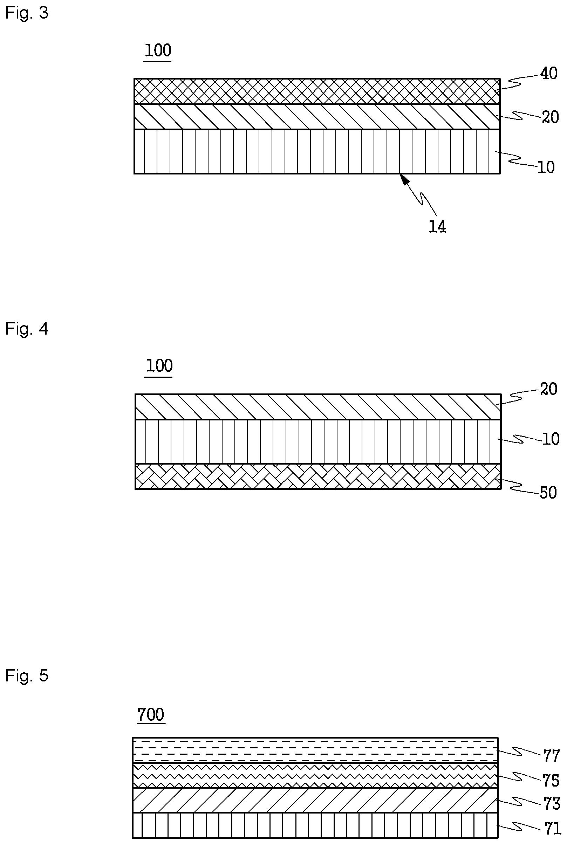

FIG. 5 is a conceptual diagram illustrating a cross-sectional view of the structure of a multilayer electronic device according to an embodiment. Referring to FIG. 5, a multilayer electronic device 700 and the like will be described in detail.

The multilayer electronic device 700 comprises a protective film 77, a functional layer 75 disposed beneath the protective film 77, a light emitting layer 73 disposed beneath the functional layer 75, and a support layer 71 disposed beneath the light emitting layer 73.

The protective film 77 may be applied as a cover layer of the multilayer electronic device 700.

The multilayer electronic device 700 may exemplarily be a display device, such as a large-area display device, a foldable display device, a bendable display device, or a flexible display device. It may also be a bendable mobile communication device (e.g., a cell phone) or a bendable laptop.

The light emitting layer 73 comprises an element that emits light in response to a signal in a display device. The light-emitting layer may exemplarily comprise a signal transmission layer that transmits an external electrical signal to the light-emitting layer, a color layer disposed on the signal transmission layer and emitting light in response to the given signal, and an encapsulation layer that protects the color layer. The signal transmitting layer may comprise a thin-film transistor (TFT), such as, but not limited to, an LTPS, a-SiTFT, or an oxide TFT. The encapsulation layer may comprise, but is not limited to, thin film encapsulation (TFE).

The light emitting layer may be disposed on the support layer 71. The support layer may be a layer having insulating and heat-resistant properties, for example, a polyimide film, a glass layer, a PET film, and the like.

The functional layer 75 may further comprise a sensor layer (not shown). The sensor layer may be a touch sensor or the like.

The functional layer 75 may further comprise a polarizing layer (not shown). The polarizing layer may be disposed on the light emitting layer, or may be disposed on the sensor layer.

As the protective film 77, the multilayer film 100 described above may be applied.

The protective film 77 may comprise the multilayer film 100 described above.

In this case, it is possible to provide a cover layer that combines flexibility, impact resistance, and surface strength for multilayer electronics. It is particularly advantageous for multilayer electronic devices with bending or rolling functions, and its high surface strength makes it durable even when applied as an externally exposed layer, and its good modulus properties may improve the protection of internal devices from external impacts.

### Protective Film (Coating Protective Film)

The protective film (coating protective film, not shown) may comprise a multilayer film.

The protective film may be placed on the exterior finish of electronics, automobiles, furniture, etc. to protect surfaces and paintwork.

The protective film may be the multilayer film 100 described above, or it may be applied in a configuration that further comprises an adhesive layer beneath the first layer or third layer.

The multilayer film has excellent optical properties, excellent impact resistance and surface hardness, making it suitable for surface protection, and its flexibility makes it easy to bond to curved or cut surfaces.

The present disclosure will now be described in more detail with reference to specific embodiments. The following embodiments are illustrative only to aid in understanding the invention and are not intended to limit the scope of the invention.

### 1. Preparation of Resin

A first and second layer resin compositions are shown in Table 1 below. Rilsan G850 is a commercially available transparent polyamide resin, abbreviated as G850. PEBA 72R53 and PEBA 35R53 are commercially available polyether block amide resins, abbreviated as 72R53 and 35R53, respectively. Rilsan Clear1200 is polyamide-based Rilsan Clear Micro-crytalline 1200 resin, abbreviated as 1200. All of the above resins were obtained from ARKEMA FRANCE.

### 2. Manufacturing of Multilayer Films

The multi-layer film was manufactured using a coextruder owned by SKC. The film was manufactured with a skin-core-skin structure of a second layer, a first layer, and a third layer, each with a thickness of about 10 µm to about 30 µm to about 10 µm, resulting in a multilayer film with a thickness of about 50 µm.

### 3. Evaluate the properties of Multilayer Films

Optical properties and color were measured. Using a haze meter (NDH-5000W, Nippon Denshoku), the average visible light transmittance of the film samples was measured according to ISO13468 standard, and the haze was measured according to ISO 14782 standard.

The thickness of each layer was measured using F-20 instrument of Filmetrics according to the manufacturer's manual. Measurements were taken from 3 to 5 points within the sample and the average value was used as the thickness.

Pencil hardness was measured according to ISO15184.

Hardness (surface hardness) was measured according to ASTM D220.

Flexural modulus was measured according to ASTM D790.

The pen tracing test was performed by rubbing an H-type pencil, which is used to evaluate pencil hardness, repeatedly on the surface of the test object for about 10 times, leaving it for 5 minutes, and visually evaluating whether a trace remains. The multilayer film was evaluated as O if the pen tracing test did not leave any visible residue, X if a clear residue was observed, and △ if a soft residue was observed.

The results of the above evaluation are shown in Table 1 below.

**[Table 1]**

| | | Example 1 | Example 2 | Example 3 | Comparison Example 1 |
|---|---|---|---|---|---|
| Multilayer film | 2nd Layer | G850* | G850 | 72R53 | G850 |
| | 1st Layer | 72R53* | 35R53* | 35R53 | 1200* |
| | 3rd Layer | G850 | G850 | 72R53 | G850 |
| Pencil Hardness @ 2nd Layer Surface | | 3B | 3B | 5B | 3B |
| Secondary Surface Hardness (Shore D) | | 80 | 80 | 71 | 80 |
| Flexural modulus (Mpa) | | 850 | 500 | 480 | 1400 |
| Pen tracing | | O | O | X | O |
| Light Transmittance | | 93.2 | 93.3 | 92.8 | 92.8 |
| Haze | | 0.8 | 0.9 | 0.9 | 12 |

| | | | | | |
|---|---|---|---|---|---|
| * The flexural modulus measured by film monolayers of each resin is shown below. G850: 1600 MPa, 72R53: 560 MPa, 35R53:450 MPa, 1200: 1200 MPa * The stored modulus values at 0°C for each resin are shown below. G850: 2,000 MPa, 72R53: 1,100 MPa, 35R53: 48 MPa * The stored modulus values at 40°C for each resin are shown below. G850: 1,500 MPa, 72R53: 520 MPa, 35R53: 35 MPa | | | | | |

Referring to Table 1 above, it may be seen that the multilayer film of the embodiment has good flexibility and excellent surface hardness. Such a multilayer film may be attached to a coating or a multilayer electronic device through an adhesive layer or the like, and may be utilized as a protective film.

Embodiments comprise multilayer films that are flexible over a wide temperature range and provide good surface protection property. The multilayer film of the embodiment is easy to stretch on curved or bent surfaces, has excellent workability, has excellent impact absorption, and is durable. The multilayer film of the embodiment has excellent applications as a protective film or support film for display devices, a protective film for coatings of automobiles, machinery, electronic devices, etc.

Although preferred embodiments of the present invention have been described in detail above, the scope of the invention is not limited thereto, and various modifications and improvements by those skilled in the art utilizing the basic concepts of the invention as defined in the following claims are also within the scope of the invention.

## Claims

1. A multilayer film comprising: a first layer having one surface and other surface; and a second layer disposed on the one surface of the first layer,
wherein a Shore D hardness measured at the surface of the second layer is 60 or greater, and the multilayer film has a flexural modulus of 1300 MPa or less.

2. The multilayer film of claim 1,
wherein the first layer and the second layer each independently comprise a polymeric resin having amide repeating units.

3. The multilayer film of claim 1,
wherein the multilayer film has a pencil hardness of 4B or more as measured by ISO15184 on one surface of the second layer.

4. The multilayer film of claim 1,
wherein the multilayer film has at least 88% visible light transmittance.

5. The multilayer film of claim 1,
wherein the multilayer film is a coextruded films of the first layer and the second layer which share one surface with each other.

6. The multilayer film of claim 1,
wherein a storage modulus of the first layer is smaller than a storage modulus of the second layer at 0°C.

7. The multilayer film of claim 1, comprising a third layer disposed beneath other surface of the first layer, and
wherein a storage modulus of the first layer is less than a storage modulus of the third layer at 0 °C.

8. The multilayer film of claim 1,
wherein the first layer comprises a polyether block amide resin, and
the second layer comprises a polyamide resin or a polyether block amide resin.

9. A protective film comprising
a release paper and a multilayer film disposed on the release paper,
wherein the multilayer film is one according to claim 1.

10. A multilayer electronic device, comprising a multilayer film according to claim 1 as a protective film or a support film.
